# EUROPEAN PATENT APPLICATION

(11) **EP 4 707 006 A1**
(43) Date of publication of application: **11.03.2026**
(21) Application number: 25201062.4
(22) Date of filing: 09.09.2025
(51) Int. Cl.: B60H 1/00, B60H 1/32, B62D 21/17, B62D 25/20

(54) **CONDENSATION WATER DRAINING SYSTEM FOR A VEHICLE**

(30) Priority: 10.09.2024 IT 202400020137
(71) Applicant: FERRARI S.p.A., 41100 Modena (IT)
(72) Inventor: CHENEY, Julien, 41100 MODENA (IT)
(74) Representative: Studio Torta S.p.A.

(57) **Abstract**

Condensation water draining system (12) for a vehicle, in particular an electric vehicle, having a support structure (2) and a conditioning unit (11), wherein the draining system (12) has a conduit (14) for the condensation water (f) of the conditioning unit (11), made, at least partially, within a hollow portion (8, 18), which is part of the support structure (2).

## Description

### CROSS-REFERENCE TO RELATED APPLICATIONS

This patent application claims priority from Italian patent application no. 102024000020137 filed on September 10, 2024, the entire disclosure of which is incorporated herein by reference.

### TECHNICAL FIELD

The invention relates to a condensation water draining system for a vehicle, in particular for an electric vehicle.

### PRIOR ART

Generally, a vehicle comprises a passenger compartment, which accommodates in use a driver and possible passengers; and a conditioning unit, also known as HVAC (Heating Ventilation and Air Conditioning) unit for the ventilation and the conditioning of the air of the passenger compartment. In particular, a four-seater vehicle comprises: a front conditioning unit for serving the front area of the passenger compartment; and in some cases, a rear conditioning unit for serving the rear area of the passenger compartment. In general, the rear conditioning unit is installed at the central tunnel of the platform, i.e. in a substantially central area of the platform.

Disadvantageously, during the operation of the conditioning unit, condensation water is generated in the evaporator and must be drained. It is known to provide for a condensation water draining system comprising pipes, generally made of rubber, which are installed so as to be able to: collect the condensation water at a conditioning unit; and discharge the condensation water outside below the vehicle. Advantageously, the condensation water draining system is configured to compensate for possible variations in the attitude of the vehicle (rolling and/or pitching), so as to guarantee the proper drainage of the condensation water in any operating condition.

An electric vehicle further comprises a high-voltage battery pack, which is fixed to the platform and substantially occupies all of the plan of the vehicle. In general, the battery pack is installed below or within the platform. In a known manner, the battery pack is installed during the mounting step, once the body shell (known by the unit as BIW - Body In White) has been completed.

Disadvantageously, the condensation water draining system of an electric vehicle of known type is substantially superimposed on the battery pack, conflicting with the integrity of the battery pack. In particular, it should be noted that it is not possible for the draining system to pass through the battery pack and that it is thus necessary for the latter to be bypassed. For example, a draining system of known type for an electric vehicle comprises: a front pipe, which extends longitudinally forward and laterally to the left (or right); and a rear pipe, which extends longitudinally backward and laterally to the right (or left) .

Disadvantageously, a draining system of known type requires a large number of components and is complex and expensive to install. Furthermore, the rubber pipes can have blockage and/or crushing issues.

### DESCRIPTION OF THE INVENTION

The object of the present invention is to provide a condensation water draining system, in particular for an electric vehicle, which overcomes the drawbacks described above.

According to the present invention, a condensation water draining system is provided, as mentioned in the appended claims.

According to the present invention a vehicle, in particular an electric vehicle, is provided, as mentioned in the appended claims.

The dependent claims define particular embodiments of the invention.

### BRIEF DESCRIPTION OF THE DRAWINGS

In the following, in order to better understand the invention, an embodiment thereof is described, by way of non-limiting example and with reference to the accompanying drawings, wherein:
- Figure 1 is a schematic view, with some parts removed for clarity, of a vehicle according to the present invention;
- Figure 2 is a schematic view of a detail of the vehicle of Figure 1;
- Figure 3 is a cross-section, on an enlarged scale, of the detail of Figure 2;
- Figure 3A is the enlargement A of Figure 3; and
- Figure 4 is a partial longitudinal section, on an enlarged scale, of the detail of Figure 2.

### EMBODIMENTS OF THE INVENTION

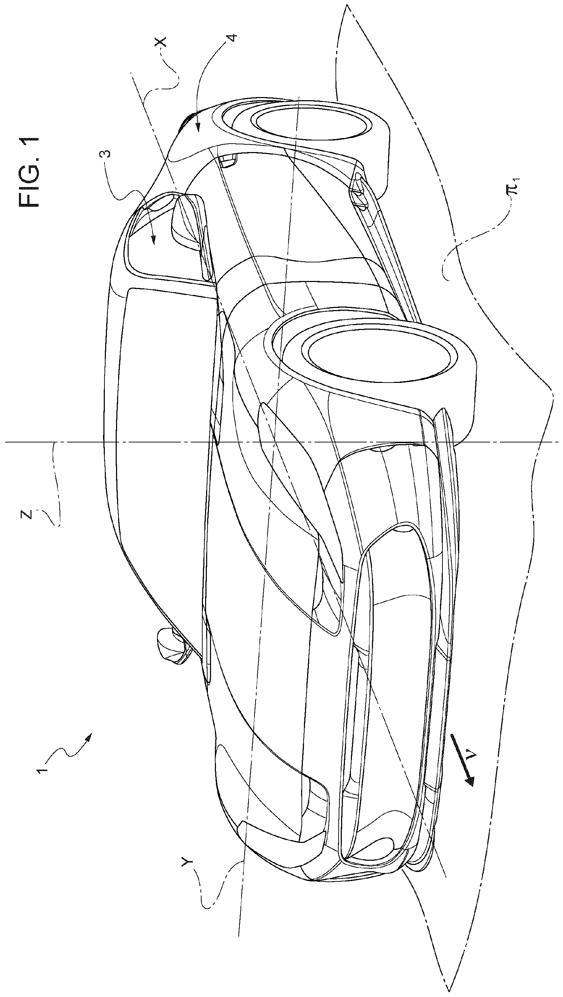

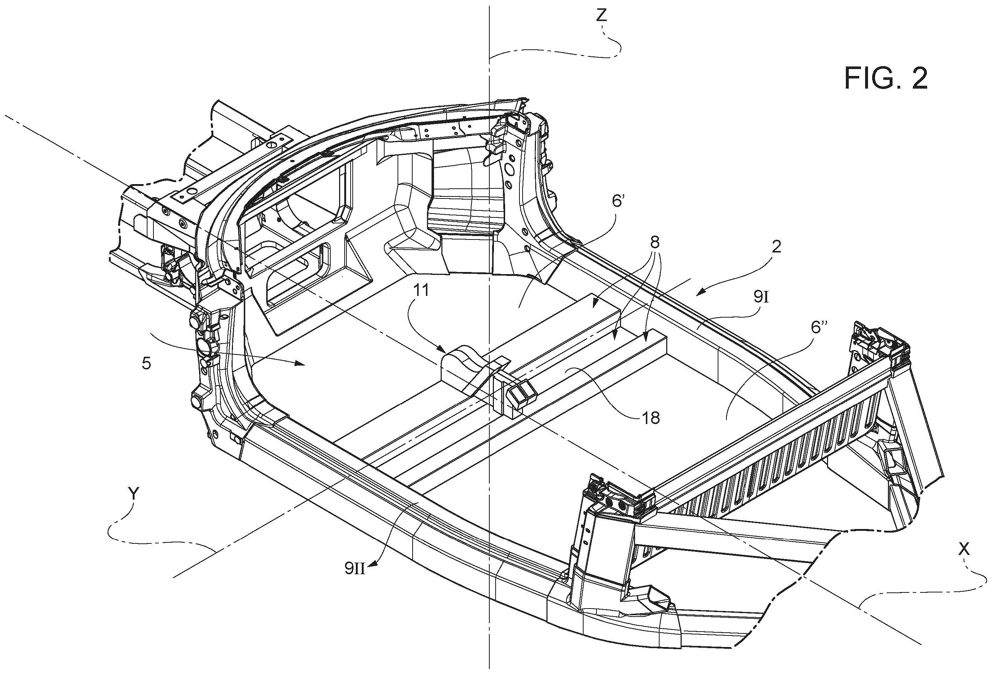

In Figures 1 and 2, reference numeral 1 is used to indicate, as a whole, a vehicle comprising, in a known manner: a support structure 2 (Figure 2 - for example a body shell and/or a chassis), which defines a passenger compartment 3 configured to accommodate a driver and possible passengers; and a bodywork 4, which externally covers, in a known manner, the support structure 2.

According to the illustrated example, the vehicle 1 is of the electric type and has four seats; in other words, the vehicle 1 comprises a front row of seats and a rear row of seats (in a known manner and not illustrated).

The vehicle 1 has: a longitudinal axis X, generally called roll axis; a transverse axis Y, generally called pitch axis; and a vertical axis Z, generally called yaw axis. Hereinafter, the terms: "length" means the extension along the longitudinal axis X; "width" means the extension along the transverse axis Y; "height" means the extension along the vertical axis "Z".

The vehicle 1 roto-translates, in a known manner, on a resting plane π1. The terms "front", "rear", "right", "left", "upper", "lower", and the like, are utilized with reference to the vehicle 1 that advances on the resting plane π1 in the forward direction v. Since a vehicle 1 comprises numerous components which are specular with respect to one another (especially with respect to the longitudinal axis X), it should be noted that, hereinafter, the suffixes I and II are utilized to distinguish a right component and a left component, respectively; and the apices ' and " are utilized to distinguish a front component and a rear component, respectively.

The terms "outer", "inner", and the like, are utilized with reference to the passenger compartment 3 in which the driver is accomodated while driving.

Figure 2 illustrates, in a schematic manner and with some parts removed for clarity, the support structure 2 of the vehicle 1. In particular, the support structure 2 comprises a platform 5 of known type and schematically illustrated. In particular, the platform 5 comprises, in turn: a front bottom 6' (on which the front row of seats is generally installed), a rear bottom 6" (on which the rear row of seats is generally installed), a plurality of crossmembers 8, a right longitudinal member 9I and a left longitudinal member 9II. The longitudinal members 9I and 9II extend along the longitudinal axis X. Each crossmember 8 extends along the transverse axis Y and is interposed between the right longitudinal member 9I and the left longitudinal member 9II, so as to connect them to each other. Each crossmember 8 and each longitudinal member 9I, 9II is a box-shaped body made of metallic sheet. The number, the shape and the dimensions of the crossmembers 8 and of the longitudinal members 9I, 9II are variable.

Figure 2 illustrates, only by way of non-exhaustive example, the central crossmembers 8, which connect the front bottom 6' and the rear bottom 6" to each other.

The vehicle 1 comprises a battery pack B, which is fixed to the platform 5 (in a known manner and schematically illustrated). In particular, the battery pack B is disposed vertically below: the front bottom 6'; the rear bottom 6"; and the central crossmembers 8. In other words, the front bottom 6', the rear bottom 6" and the central crossmembers 8 cover the battery pack B at the top.

The vehicle 1 further comprises a conditioning unit 11, which is installed on the platform 5, at the central crossmembers 8. In particular, the conditioning unit 11 is fixed to the central crossmembers 8, at the longitudinal axis X. In other words, the conditioning unit 11 is disposed at a central area of the platform 5, in general at the central tunnel (not illustrated). The conditioning unit 11 is configured to serve the rear row of seats. The vehicle 1 can comprise a further conditioning unit (not illustrated) of known type and configured to serve the front row of seats.

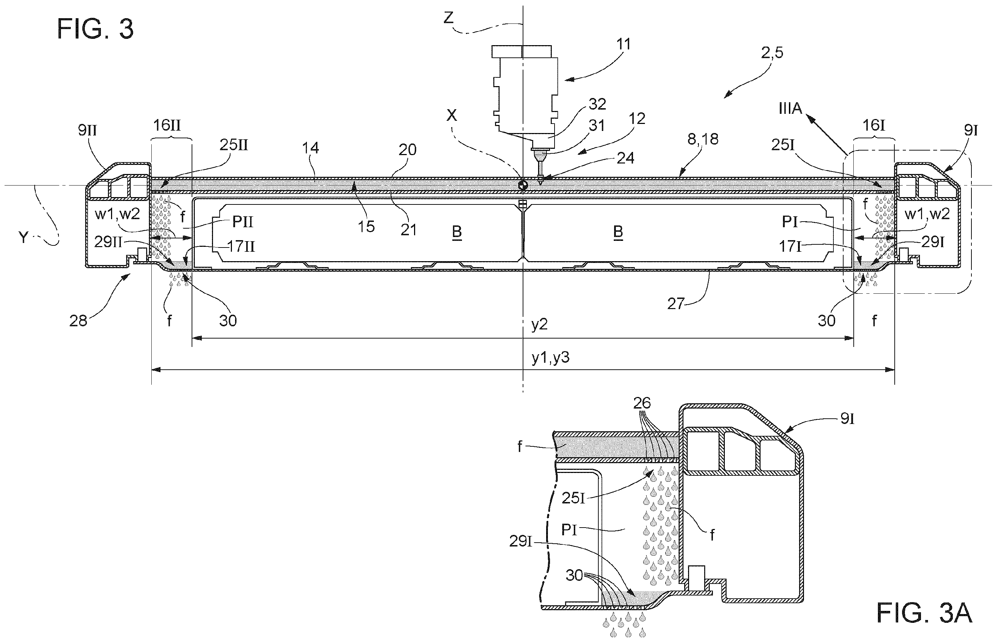

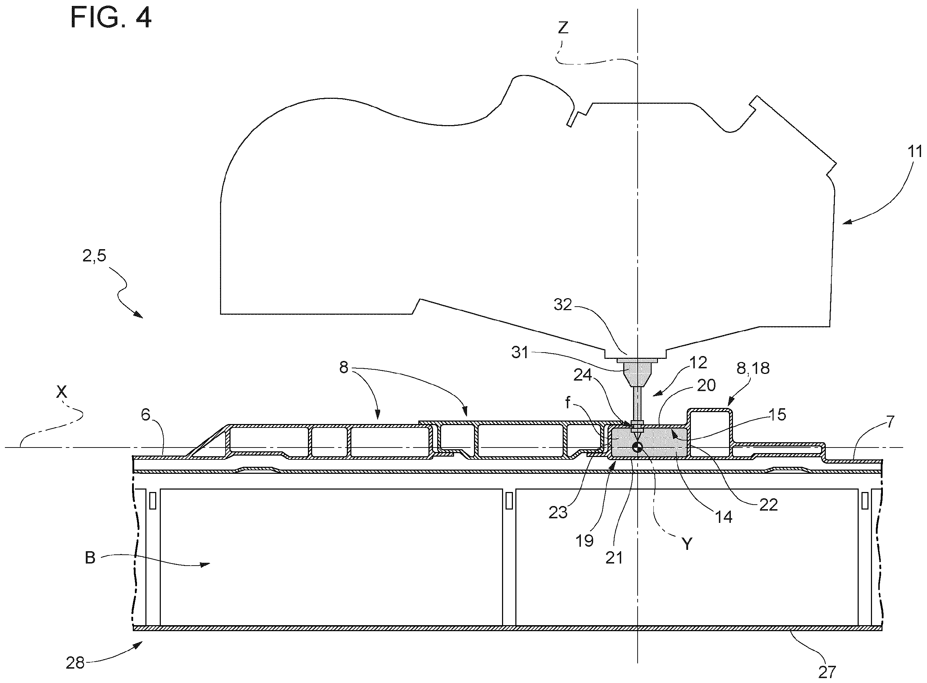

Figures 3 and 4 illustrate, in a schematic manner and by way of example, a draining system 12 according to the present invention. The draining system 12 is connected to the conditioning unit 11.

Advantageously, the draining system 12 comprises a conduit 14 disposed, at least partially, within the platform 5.

According to the illustrated example, the conduit 14 is within a beam 8, hereinafter identified as draining crossmember 18. In particular, the draining crossmember 18 has a longitudinal inner cavity 15, which constitutes the conduit 14. The draining crossmember 18 was made by means of extrusion. The draining crossmember 18 is made of metallic material. The draining crossmember 18 is a structural element of the platform 5; in other words, the draining crossmember 18 has mechanical properties, in particular of fatigue strength, suitable for the correct operation of the entire platform 5.

The shape and the dimensions of the cavity 15 are variable. According to a variation not illustrated according to the present invention, the draining system 12 can comprise a pipe (not illustrated) which is disposed within the cavity 15 and constitutes the conduit 14.

The conduit 14 extends along the axis Y. The width y1 of the conduit 14 is greater than the width y2 of the battery pack B. In particular, the conduit 14 has two end portions, hereinafter identified as right portion 16I and left portion 16II, which laterally protrude outside the battery pack B. In other words, the conduit 14 protrudes with its lateral ends outside the battery pack B by an amount w1. The extension of the amount w1 is variable. According to the illustrated example, the right portion 16I and the left portion 1611 protrude by the same amount w1. According to a variation not illustrated, the right portion 16I and the left portion 1611 can protrude by amounts different from one another.

According to the illustrated example, the cavity 15 is obtained within a box-shaped body 19 having a polygonal section. In particular, the box-shaped body 19 has a rectangular section and is delimited by: an upper wall 20 and a lower wall 21 parallel to the resting plane π1; a front wall 22 and a rear wall 23 perpendicular to the resting plane π1. The upper wall 20 and the lower wall 21 are parallel and counterposed to each other and have greater dimensions. The front wall 22 and the rear wall 23 are parallel and counterposed to each other and have smaller dimensions. The box-shaped body 19 is closed at its ends. According to the illustrated example, the box-shaped body 19 is closed at its lateral ends by the right longitudinal member 9I and by the left longitudinal member 9II, respectively.

The draining crossmember 18 has a condensation water inlet 24, which connects the cavity 15 with the outside. According to the illustrated example, the inlet 24 is a hole made through the upper wall 20 and at an intermediate position, in other words half-way along the transverse axis Y. The shape and the dimensions of the inlet 24 are variable.

The draining crossmember 18 has a plurality of condensation water outlets 25. According to the illustrated example, the draining crossmember 18 has, for each end portion 16I, 16II, a respective condensation water outlet 25I, 25II. In particular, the draining crossmember 18 has for the right portion 16I and the left portion 16II a right outlet 25I and a left outlet 25II, respectively (Figure 3). Each outlet 25I, 25II connects the cavity 15 with the outside of the draining crossmember 18. According to the illustrated example, each outlet 25I, 25II is formed by a plurality of holes 26 made through the lower wall 21 and at the respective end portion 16I, 16II. The number, the shape and the dimensions of the holes 26 of each outlet 25I, 25II are variable. According to a variation not illustrated, each outlet 25I, 25II is made by means of one single respective hole. Advantageously, the holes 26 are configured to allow, in use, the condensation water f to fall within a precipitation volume V disposed outside the battery pack B. According to the illustrated example, the draining system 12 according to the present invention has a right precipitation volume PI and a left precipitation volume PII, which are obtained between the battery pack B and the right longitudinal member 9I and the left longitudinal member 9II, respectively. The shape and the dimensions of the right precipitation volume PI and the left precipitation volume PII are variable.

Each end portion 16I, 1611 is axially closed, in other words, the cavity 15 communicates with the outside only through the inlet 24 and the outlets 25I, 25II. According to the illustrated example, the end portions 16I and 1611 are axially closed by the right longitudinal member 9I and by the left longitudinal member 9II, respectively.

According to the illustrated example, the battery pack B is inserted within the platform 5. In other words, the platform 5 comprises, a lower shell 27 which is fixed at the bottom to the longitudinal members 9I and 9II so as to close at the bottom the housing space of the battery pack B. The shell 27 is parallel to the resting plane π1. The shell 27 forms, together with the platform 5 and the longitudinal members 9I, 9II, a closed casing 28, within which the battery pack B is inserted. The shape and the dimensions of the shell 27 and of the casing 28 are variable.

The shell 27 laterally protrudes outside the battery pack B and closes, at the bottom, both the right precipitation volume PI and the left precipitation volume PII. In particular, the width y3 of the shell 27 is greater than the width y2 of the battery pack B. In particular, the shell 27 has two end portions, hereinafter identified as right portion 17I and left portion 17II, which laterally protrude outside the battery pack B. In other words, the shell 27 protrudes with its lateral ends outside the battery pack B by an amount w2. The extension of the amount w2 is variable. According to the illustrated example, the right portion 17I and the left portion 17II protrude by the same amount w2. According to a variation not illustrated, the right portion 17I and the left portion 17II can protrude by amounts different from one another.

According to the illustrated example, the conduit 14 and the shell 27 protrude outside the battery pack B by the same amount (in other words the amounts w1 and w2 are equal to each other). According to a variation not illustrated, the conduit 14 and the shell 27 protrude from the battery pack B by different amounts (in other words the amounts w1 and w2 are different).

Advantageously, each portion 17I, 17II of the shell 27 has a respective drain 29I, 29II. Each drain 29I, 29II connects the respective draining volume PI, PII with the outside. According to the illustrated example, each drain 29I, 29II is formed by a plurality of holes 30 made through the shell 27 and at the respective end portion 17I, 17II. The number, the shape and the dimensions of the holes 30 of each drain 29I, 29II are variable. According to a variation not illustrated, each drain 29I, 29II is made by means of one single respective hole. Advantageously, the holes 30 are configured to allow, in use, the condensation water f to fall below the vehicle 1, on the resting plane π1.

Preferably, each portion 17I, 17II is shaped so as to favour the outflow of the condensation water f towards the respective holes 30. For example, each portion 17I, 17II can be at least partially inclined so as to allow the condensation water f to flow towards the holes 30.

Advantageously, the draining system 12 further comprises a conduit 31 which connects a condensation water drain 32 (of known type and schematically illustrated) of the conditioning unit 11 with the inlet 24 of the draining crossmember 18. Preferably, the conduit 31 is a funnel-shaped gasket with serrated teeth, which fits within the inlet.

Hereinafter, by way of non-limiting example, the condensation water draining system 12 is described during use. It should be noted that the descriptive sequence presented hereinafter merely has a non-limiting exemplifying purpose.

The condensation water f exiting the condensation water drain 32 of the conditioning unit 11 flows through the conduit 31 within the conduit 15 of the draining crossmember 18.

Within the conduit 15, the condensation water f is free to flow in any direction as a function of the movements of the vehicle 1. In any case, the condensation water f is conveyed towards the end portions 16I, 16II.

The condensation water f that reaches the end portions 16I, 16II rain falls through the outlets 25I, 25II within the draining volumes PI, PII.

The condensation water f thus collects on the respective end portions 17I, 17II of the shell 27.

The condensation water f that collects on the end portions 17I, 17II of the shell 27 flows towards the respective drains 29I, 29II.

Advantageously a draining system 12 of the type described above allows obtaining a compact structure integrated within the platform 5 of the vehicle. Furthermore, it allows eliminating the use of rubber pipes facilitating assembling operations and costs and weight reduction.

Advantageously, the fact of providing for the conduit 14 within the draining beam 18, namely within a beam of the platform 5, allows obtaining a better separation with the battery pack B reducing the risks of losses and possible damaging of the battery pack B.

Advantageously, the solution of the type described above allows obtaining an electric vehicle 1 with a conditioning unit 11 configured to serve a rear row of seats. In other words, the solution of the type described above allows obtaining an electric vehicle comprising both a conditioning unit (of known type and not illustrated) for serving the front row of seats and a conditioning unit 11 for serving the rear row of seats.

## Claims

1. **A** condensation water draining system for a vehicle (1), in particular an electric vehicle (1), comprising a support structure (2) and a conditioning unit (11); the draining system (12) being **characterized by** having a conduit (14) for the condensation water (f) made, at least partially, within a hollow portion (8; 18), which is part of said support structure (2).

2. A condensation water draining system according to claim 1, wherein the vehicle (1) comprises a platform (5); wherein said conduit (14) is made at least partially within a hollow portion (8; 18), which is part of said platform (5).

3. A condensation water draining system according to claim 2, wherein said hollow portion (8; 18) forms a crossmember of said platform (5).

4. A condensation water draining system according to claim 3, wherein said hollow portion (8; 18) forms a central crossmember, which subdivides the platform (5) in a front area (6') and a rear area (6"); in particular, the central crossmember (18) extends along a transverse central axis (Y) of said platform (5).

5. A condensation water draining system according to any preceding claim, wherein the hollow portion (8; 18) is a box-shaped body made of metallic material extending along an axis (Y) and having a first end (16I) and a second end (16II); in particular, the first end (16I) and the second end (16II) are fixed, in use, to a first longitudinal member (9I) and a second longitudinal member (9II), respectively, of the platform (5); the first longitudinal member (9I) and the second longitudinal member (9II) extend along a longitudinal axis (X) of said platform (5).

6. A condensation water draining system according to claim 5, wherein the box-shaped body has: an inlet (24) for the condensation water (f) disposed in a central position, along said axis (Y), of the box-shaped body; a first outlet (25I) and a second outlet (25II) for the condensation water (f) disposed at the first end (16I) and the second end (16II), respectively.

7. A condensation water draining system according to claim 6, wherein each outlet (25I; 25II) comprises one or more holes (26), each of which connects said conduit (14) with the outside.

8. A condensation water draining system according to claim 6 or 7 and comprising a shell (27) extending parallel below said conduit (14); wherein said conduit (14) and said shell (27) are part of a casing (28), which houses, in use, a battery pack (B) of said vehicle (1); wherein said shell (27) has a first end portion (17I) and a second end portion (17II) disposed below the first outlet (25I) and the second outlet (25II), respectively, for the condensation water (f); wherein the first end portion (17I) has a first drain (29I) for the condensation water (f), so as to allow the spillage by fall of the condensation water (f) below the platform (5); wherein, the second end portion (17II) has a second drain (29II) for the condensation water (f), so as to allow the spillage by fall of the condensation water (f) below the platform (5).

9. A condensation water draining system according to claim 8, wherein each drain (29I; 29II) comprises one or more holes (30), each of which fluidically connects the inner volume of said casing (28) with the outside.

10. A vehicle, in particular an electric vehicle (1), comprising a support structure (2), a conditioning unit (11) and a condensation water draining system (12) according to any preceding claim connected to said conditioning unit (11).

11. A vehicle according to claim 10 and comprising a front row of seats and a rear row of seats, wherein said conditioning unit (11) is configured to serve the rear row of seats.
